# EUROPÄISCHE PATENTSCHRIFT

(11) **EP 0 919 060 B1**
(45) Veröffentlichungstag und Bekanntmachung des Hinweises auf die Patenterteilung: **24.05.2000**
(21) Anmeldenummer: 97936689.5
(22) Anmeldetag: 06.08.1997
(51) Int. Cl.: G11B 33/04

(54) **KLAPPHÜLLE**
HINGED CASE
BOITE A VOLET RABATTABLE

(30) Priorität: 08.08.1996 DE 29613754 U
(43) Veröffentlichungstag der Anmeldung: 02.06.1999
(73) Patentinhaber: Langenbach, Klaus, D-59558 Lippstadt (DE)
(72) Erfinder: Langenbach, Klaus, D-59558 Lippstadt (DE)
(74) Vertreter: Strauss, Hans-Jochen, Dipl.-Phys., Dr.
(86) Internationale Anmeldenummer: EP9704292
(87) Internationale Veröffentlichungsnummer: WO9807159

(56) Entgegenhaltungen:
- WO-A-96/13835
- US-A- 5 243 504

## Beschreibung

Die Erfindung betrifft eine Klapphülle mit schalenförmigem Unterteil, an die ein aufklappbares Oberteil so angelenkt ist, daß die Anlenkseite einen Hüllenrücken bildet, wobei das Unterteil einen Einsatz mit einer zentralen Ausformung zum formschlüssigen Einlegen einer CD, einer Diskette, eines Bildes, eines Kalenders o.dgl. aufweist, und wobei dieser Einsatz einen Rücksprung aufweist, der in Verbindung mit dem Rückenteil des Unterteils und dessen Rückseite einen quaderförmigen Hohlraum bildet.

Derartige Klapphüllen sind für die Aufnahme von Compakt-Disks oder von Disketten aus WO-A-96/13835 bekannt. Als Mittel zur Verkaufsförderung und zur Erregung von Aufmerksamkeit sind grafisch gestaltete Cover vorgesehen.

Es ist daher die Aufgabe der Erfindung diese Klapphüllen so weiterzubilden, daß auch körperlich gestaltete Mittel zur Verkaufsförderung und zur Erregung von Aufmerksamkeit, darunter auch solche mit flüssigem Inhalt, eingesetzt werden können, wobei die Inhalte beispielsweise Verkaufs-Produkte darstellen oder an solche erinnern.

Diese Aufgabe wird durch die Merkmale des Hauptanspruchs gelöst; vorteilhafte Weiterbildungen und bevorzugte Ausführungsformen beschreiben die Unteransprüche.

In den von einem Rücksprung eines in das Unterteil einer Klapphülle eingesetzten Einsatzes mit einer zentralen Ausformung zum formschlüssigen Einlegen einer CD, einer Diskette, eines Bildes, eines Kalenders o.dgl. gebildeten Hohlraum ist ein beispielsweise mit Stopfen oder Kappe verschlossener Hohlkörper eingelegt, in dem als Inhalt die Mittel zur Verkaufsförderung oder Aufmerksamkeitserregung eingebracht sind. Querschnitt und Länge des Hohlkörpers sind dabei so, daß er in den Hohlraum paßt. Dabei werden runde oder ovale Querschnitte ebenso eingesetzt, wie quadratische oder rechteckige. In einer bevorzugten Ausbildung ist der Hohlkörper als Hohl-Quader ausgebildet, der vorzugsweise auch formschlüssig in den Hohlraum einfügbar ist.

Dieser Hohlkörper wird aus durchsichtigem, vorzugsweise glasklarem Kunststoff hergestellt, der die eingebrachten Mittel zur Verkaufsförderung oder Aufmerksamkeitserregung erkennen läßt. Zur Aufnahme eines von mindestens einem festen Körper gebildeten Mittels zur Verkaufsförderung oder Aufmerksamkeitserregung ist der Hohlkörper oder der Hohl-Quader abgeschlossen ausgebildet; werden die Mittel zur Verkaufsförderung oder Aufmerksamkeitserregung von flüssigen Körpern gebildet, ist der Hohlkörper oder der Hohl-Quader flüssigkeitsdicht abgeschlossen ausgebildet.

Als Mittel zur Verkaufsförderung oder Aufmerksamkeitserregung sind zum einen feste Körper Miniaturen (etwa Autos, Lokomotiven, Zahnräder oder Werkeuge u.dgl.), aber auch Perlen, Kugeln, oder andere geometrische Körper, oder aber Thermometer o.dgl. vorgesehen; weiter können auch Leuchtdioden vorgesehen sein, die vorteilhaft auf einer eingesetzten Platine in einer verkaufsfördernden oder aufmerksamkeitserregenden (ggf. blinkenden) Art angeordnet sind, wobei die Platine neben der Steuerschaltung auch die Spannungsversorgung z. B. aus einer Batterie enthält. Zum anderen können auch Flüssigkeiten (Farbflüssigkeiten, nicht mischbare, unterschiedlich gefärbte Flüssigkeiten mit geringem Dichteunterschied, Flitter, Glitzer oder Schneeimitat enthaltende Flüssigkeiten (wobei deren Sinkgeschwindigkeit über die Zähigkeit der Flüssigkeit einstellbar ist), thermochrome Flüssigkeiten, Leuchtflüssigkeiten, fluoresziernde oder nachtleuchtende Flüssigkeiten o.dgl.) vorgesehen sein. Im Zusammenhang mit Nach- bzw. Nachtleuchten lassen sich auch feste Gegenstände mit Oberflächen versehen, die - ebenso wie fluoreszierende oder nachtleuchtene Flüssigkeiten - ihre Aufmerksamkeitserregung auch im Dunkel entfalten.

Der Hohlkörper aus durchsichtigem oder glasklarem Kunststoff kann nach den üblichen Herstellungsverfahren der Kunststoff-Verarbeitung hergestellt werden. So läßt sich dieser Hohlkörper im Spritzgußverfahren herstellen. Das offene Ende eines solchen Hohlkörpers wird mittels eines eingesetzten Verschlußstopfens oder einer aufgesetzten Verschlußkappe verschlossen, so daß der geschlossene Hohlraum entsteht. Dabei lassen sich solche Hohlkörper zweischalig herstellen, wobei beide Halbschalen form- und oder kraftschlüssig miteinander zu dem geschlossenen Hohlraum verbindbar sind. Zum Verbinden werden die beiden Halbschalen vorteilhaft durch Ineinander-Stecken, Zusammenklipsen, Kleben, Ultraschallverschweißung oder andere Verfahrensweisen miteinander verbunden.

Auch für die Herstellung einstückiger, relativ kurzer Hohlkörper eignet sich dieses Spritzgießverfahren, mit dem sich die Hohlkörper toleranzarm herstellen lassen; bei relativ langen Hohlkörpern wird jedoch wegen der Entformungsschrägen das Lumen zu stark eingeengt. Für diesen Fall sind Hohlkörper geeignet, die als Strangpreßprofile hergestellt, auf Länge geschnitten und - nach Einbringen des Inhalts - beidendig verschlossen werden. Diese Hohl-Quader sind durch Extrudieren und Ablängen wirtschaftlich herstellbar, jedoch weisen sie an beiden Enden eine Öffnung auf. Diese beiden Öffnungen bedingen einen doppelten Verschluß, der - wie vorbeschrieben - mit Stopfen oder mit Kappen bewirkt werden kann. So verschlossen, sind sie auch für Flüssigkeiten einsetzbar.

Vorteilhaft werden die Hohlkörper im Blas-Spritzgußverfahren blasgeformt. Bei diesem Verfahren wird ohne Kern gearbeitet: Der durch Erhitzen plastifizierte Kunststoff wird in die Form geschossen und während des Einschießens wird zentral in den Kunststoff Luft eingedrückt, die den Kunststoff an die Formwandung preßt und so den Hohlraum entstehen läßt. Zwar ist dieser Hohlraum gegenüber der Herstellung als Spritzgußteil mit höheren Toleranzen behaftet, jedoch wird dies durch den Wegfall der Entformungsschrägen wettgemacht.

Das bzw. die offene/-nen Ende/-den des Hohlkörpers sind mit Verschlußmitteln verschlossen. Als solche Verschlußmittel eigenen sich beispielsweise Stopfen, die in die Höhlung eingesetzt werden, oder Kappen, die auf den Hohlkörper aufgesetzt, die Höhlung verschließen. Damit sind zum einen die eingebrachten Mittel zur Verkaufsförderung gesichert, und zum anderen gestattet dieser Verschluß auch das Einbringen von gewünschten, oben näher beschriebenen, flüssigen Inhalten.

Dieser Hohlkörper gestattet eine Bevorratung mit gewünschten, als Mittel zur Verkaufsförderung dienenden, unterschiedlichen Inhalten, so daß bei Bedarf eine gewünschte Anzahl von Klapphüllen mit diesen Hohlkörpern ausgestattet werden kann. Dabei werden die so ausgestatteten und mit diesen Mitteln zur Verkaufsförderung versehenen Klapphüllen eingesetzt, wobei die in die Hohlkörper oder den Hohl-Quader eingebrachten Inhalte so ausgewählt sind, daß sie die Aufmerksamkeit des Käufers erwecken und auf dieses Verkaufs-Produkt hinweisen.

Ein Ausführungsbeispiel der Erfindung wird anhand der Figuren 1 bis 3 näher erläutert; diese zeigen
- Fig. 01:: Eine perspektivische Darstellung der Klapphülle (halbgeöffnet);
- Fig. 02:: Einen Schnitt durch das Unterteil nach Fig. 2 entsprechend Schnittlinie II-II;
- Fig. 03:: Eine perspektivische Ansicht der Hohl-Quaders mit Verschlußmittel,
Fig. 3a: Mit Verschlußstopfen als Verschlußmittel,
Fig. 3b: Mit Verschlußkappe als Verschlußmittel.

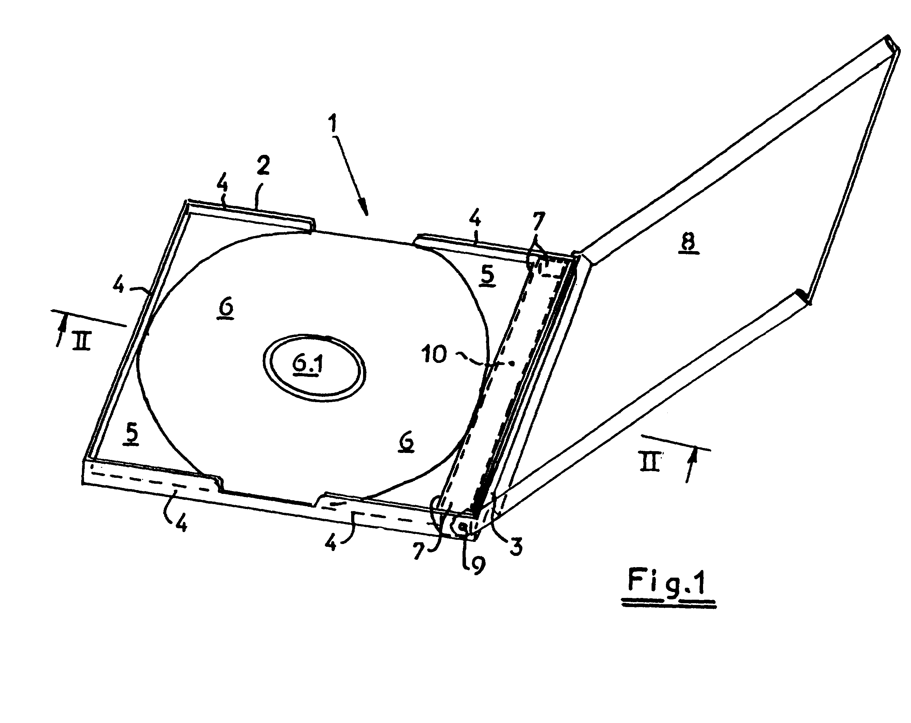

Die Figur 1 zeigt - ohne darauf zu beschränken - eine perspektivische Schema-Ansicht einer Klapphülle 1, wie sie zur Aufbewahrung von Compakt-Disks eingesetzt wird, mit einem als Hohl-Quader dargestellten Hohlkörper. Diese Klapphülle besteht aus einem Unterteil 2 und einem Oberteil 8, die mittels einer Zapfenverbindung 9 aneinander gelenkt sind. Das Unterteil weist einen Rücken 3 auf, sowie einen umlaufenden Rand 4, der beispielsweise an zwei einander gegenüberliegenden Seiten durch Griffmulden unterbrochen ist. In dieses Unterteil ist der Einsatz 5 eingelegt, der im wesentlichen formschlüssig darin untergebracht ist. Dieser Einsatz 5 weist eine Ausformung 6 auf, die - in der hier dargestellten Form - die Kompakt-Disk aufnimmt; ein Zentrierring 6.1 sorgt für einen zentrischen Sitz der eingesetzten Kompakt-Disk. Dabei versteht es sich von selbst, daß die Ausformung 6 dem aufzunehmenden Gegenstand anzupassen ist und beispielsweise bei Disketten im wesentlichen rechteckig ohne Zentriering ausgebildet ist. Der Einsatz 5 weist weiter einen Rücksprung 7 auf, der so ausgebildet ist, daß er zusammen mit dem Rücken 3 und dem Boden 2.1 des Unterteils einen etwa quaderförmigen Hohlraum bildet, in den der hier als Hohl-Quader 10 ausgebildete Hohlkörper eingesetzt ist; dabei ist der Hohl-Quader 10 in der gewählten Darstellung so ausgebildet, daß er nahezu formschlüssig in diesen Hohlraum eingesetzt werden kann.

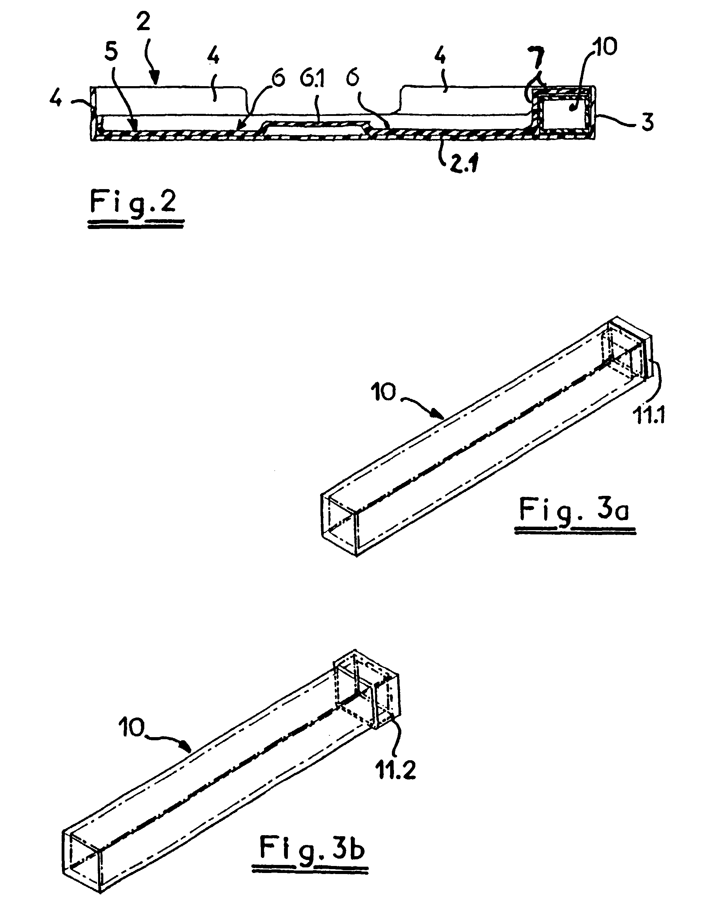

Die Figur 2 läßt die vorstehend geschilderten Verhältnisse im Schnitt deutlich erkennen, wobei bei dieser Darstellung das Oberteil 8 (Fig. 1) weggelassen worden ist. Der Einsatz 5 weist nahe dem Rücken 3 den Rücksprung 7 auf, der bis etwa zur freien oberen Kante der umlaufenden Ränder 4 reicht. Dieser Rücksprung 7 bildet zusammen mit dem Rükken 3 und dem im Bereich des Rücksprunges 7 liegenden Teil des Bodens 2.1 den Hohlraum mit im wesentlichen rechteckigem Querschnitt. In diesem Hohlraum ist der Hohl-Quader 10, dessen Querschnitt und dessen Länge mit dem Querschnitt und der Länge des Hohlraumes etwa übereinstimmt, so angeordnet, daß er etwa formschlüssig in dem Hohlraum liegt.

Der in den Figuren 3 im perspektivischen Schema als Hohl-Quader 10 ausgebildete Hohlkörper selbst ist aus durchsichtigem oder glasklarem Kunststoff geformt, der zumindest bei Spritzgußteilen oder Blasspritzgußteilen einseitig mit dem Verschlußstopfen 11.1 (Fig. 3a) bzw. mit einer Verschlußkappe 11.2 (Fig. 3b) verschlossen ist; stranggepreßte Formteile weisen an beiden Enden je einen Verschlußstopfen bzw. Verschlußkappen auf. Dieser Verschlußstopfen 11.1 besitzt ein Außenteil, das etwa den äußeren Querschnitt des Hohl-Quaders 10 fortsetzt. In das Lumen des Hohl-Quaders 10 ist das (nicht näher bezeichnete) Verschließteil des Verschlußstopfens 11.1 eingeführt. Die Verschlußkappe 11.2 übergreift den Hohl-Quader 10 am offenen Ende; dazu weist sie einen Hohlraum auf, der das Ende des Hohl-Quaders 10 aufnimmt. Beide sitzen im wesentlichen formschlüssig; der Stopfen 11.1 bzw. die Kappe 11.2 besteht aus einem Kunststoff, der mit dem Kunststoff des Hohl-Quaders 10 verbindbar ist und beispielsweise durch Verkleben oder Verschweißen festgelegt werden kann. Hierbei versteht es sich von selbst, daß es bei einem Verschlußstopfen 11.1 lediglich auf das in das Lumen des Hohlkörpers einführbare Verschließteil ankommt, so daß das Außenteil auch voll entfallen kann und lediglich das in das Lumen des Hohlkörpers eingeführte Verschließteil erhalten bleibt, das, eingesetzt in den Hohlkörper, dort in vorbeschriebener Weise festgelegt wird.

## Patentansprüche

1. Klapphülle (1) mit schalenförmigem Unterteil (2), an die ein aufklappbares Oberteil (8) so angelenkt ist, daß die Anlenkseite einen Hüllenrücken bildet, wobei das Unterteil (2) einen Einsatz (5) mit einer zentralen Ausformung (6) zum formschlüssigen Einlegen einer CD, einer Diskette, eines Bildes, eines Kalenders o.dgl. aufweist, und wobei dieser Einsatz (5) einen Rücksprung (7) aufweist, der in Verbindung mit dem Rückenteil des Unterteils und dessen Rückseite einen quaderförmigen Hohlraum bildet, wobei die Klapphülle mit Mittel zur Verkaufsförderung oder Aufmerksamkeitserregung versehen ist, **dadurch gekennzeichnet**, daß ein in den Hohlraum im wesentlichen formschlüssig einsetzbarer Hohlkörper vorgesehen ist, der aus einem durchsichtigen, vorzugsweise glasklaren Kunststoff hergestellt ist, und daß die Mittel zur Veraufsförderung oder Aufmerksamkeitserregung in dem Hohlkörper angeordnet sind.

2. Klapphülle nach Anspruch 1, **dadurch gekennzeichnet**, daß als Hohlkörper ein Hohl-Zylinder mit rundem oder ovalem Querschnitt vorgesehen ist.

3. Klapphülle nach Anspruch 1, **dadurch gekennzeichnet**, daß als Hohlkörper ein Hohl-Quader (10) mit quadratischem oder rechteckigem Querschnitt vorgesehen ist.

4. Klapphülle nach einem der Ansprüche 1 bis 3, **dadurch gekennzeichnet**, daß der Hohlkörper oder der Hohl-Quader (10) zur Aufnahme eines von mindestens einem festen Körper gebildeten Mittels zur Verkaufsförderung oder Aufmerksamkeitserregung abgeschlossen ausgebildet ist.

5. Klapphülle nach einem der Ansprüche 1 bis 3, **dadurch gekennzeichnet**, daß der Hohlkörper oder der Hohl-Quader (10) zur Aufnahme eines von mindestens einem flüssigen Körper gebildeten Mittels zur Verkaufsförderung oder Aufmerksamkeitserregung flüsigkeitsdicht abgeschlossen ausgebildet ist.

6. Klapphülle nach Anspruch 5, **dadurch** gekennzeichnet, dass der Hohlkörper oder Hohlquader mit einer Flüssigkeit gefüllt ist.

7. Klapphülle nach Anspruch 4 oder 5, **dadurch gekennzeichnet,** daß Hohlkörper oder Hohl-Quader (10) zweischalig ausgebildet ist, wobei beide Halbschalen form- und/oder kraftschlüssig zusammenfügbar sind.

8. Klapphülle nach Anspruch 4 oder 5, **dadurch gekennzeichnet**, daß Hohlkörper oder Hohl-Quader (10) einstückig ausgebildet ist, dessen offenes Ende mit einem Verschlußmittel zugesetzt ist, wobei vorzugsweise vorhandene Belüftungsöffnungen verschlossen sind.

9. Klapphülle nach Anspruch 4 oder 5, **dadurch gekennzeichnet,** daß Hohlkörper oder Hohl-Quader (10) als abgelängtes Hohlprofil ausgebildet ist, dessen beide offenen Enden je mit einem Verschlußmittel zugesetzt ist.

10. Klapphülle nach Anspruch 6 oder 7, **dadurch gekennzeichnet**, daß als Verschlußmittel ein Stopfen (11.1) oder eine Kappe (11.2) vorgesehen ist.

## Claims

1. Hinged case (1) having a tray-type bottom part (2) to which a flip-up-type upper part (8) is hinged in such a way that the hinge side forms a case back, the bottom part (2) having an insert (5) with a central formation (6) for positive insertion of a CD, diskette, picture, calendar or the like, and this insert (5) having a raise (7) which in conjunction with the back part of the bottom part and its rear side forms a cuboid-shaped hollow space, the hinged case featuring means for sales promotion or for catching the eye, characterised in that in the hollow space there is provided a substantially positively insertable hollow body made of a transparent, preferably clear plastic, and in that the means for sales promotion or eye catching are arranged in the hollow body.

2. Hinged case as claimed in Claim 1, characterised in that the hollow body is a hollow cylinder of circular or oval cross-section.

3. Hinged case as claimed in Claim 1, characterised in that the hollow body is a hollow cuboid (10) of square or rectangular cross-section.

4. Hinged case as claimed in any one of Claims 1 to 3, characterised in that the hollow body or hollow cuboid (10) is of sealed design for holding a means for sales promotion or for catching the eye which is formed by at least one solid body.

5. Hinged case as claimed in any one of Claims 1 to 3, characterised in that the hollow body or hollow cuboid (10) is of liquid-tight sealed design for holding a means for sales promotion or for catching the eye which is formed by at least one liquid body.

6. Hinged case as claimed in Claim 5, characterised in that the hollow body or hollow cuboid is filled with a liquid.

7. Hinged case as claimed in Claim 4 or 5, characterised in that the hollow body or hollow cuboid (10) is made in two halves, the two halves being adapted to be positively and/or non-positively joined together.

8. Hinged case as claimed in Claim 4 or 5, characterised in that the hollow body or hollow cuboid (10) is made in one piece, the open end of which is closed with a closing means, whereby preferably present ventilation openings are sealed.

9. Hinged case as claimed in Claim 4 or 5, characterised in that the hollow body or hollow cuboid (10) is designed as a cut-to-length hollow section, the two open ends of which are each closed with a closing means.

10. Hinged case as claimed in Claim 6 or 7, characterised in that the closing means is a plug (11.1) or a cap (11.1).

## Revendications

1. Boîte à volet rabattable (1) comportant une partie inférieure en forme de coque (2), sur laquelle est articulée une partie supérieure (8) pouvant être soulevée par rabattement, de telle sorte que le côté articulé forme un côté arrière de la boîte, et dans laquelle la partie inférieure (2) comporte un insert (5) pourvu d'une configuration centrale (6) pour l'insertion, selon une liaison par formes complémentaires, d'un disque compact, d'une disquette, d'une image, d'un calendrier ou analogue, et dans laquelle cet insert (5) possède un ressaut (7), qui forme, en liaison avec la portion arrière de la partie inférieure et le côté arrière de cette partie une cavité de forme parallélépipédique, et dans laquelle la boîte à volet rabattable est équipée de moyens destinés à favoriser la vente ou à attirer l'attention, caractérisé en ce qu'il est prévu un corps creux qui peut être inséré essentiellement selon une liaison par formes complémentaires dans la cavité et qui est réalisée en une matière plastique transparente, de préférence claire comme du verre, et que les moyens formés par au moins un corps solide et servant à favoriser la vente ou attirer l'attention sont disposés dans le corps creux.

2. Boîte à volet rabattable selon la revendication 1, caractérisée en ce qu'il est prévu comme corps creux un cylindre creux possédant une section transversale circulaire ou ovale.

3. Boîte à volet rabattable selon la revendication 1, caractérisée en ce qu'il est prévu comme corps creux un parallélépipède creux (10) possédant une section transversale carrée ou rectangulaire.

4. Boîte à volet rabattable selon l'une des revendications 1 à 3, caractérisée en ce que le corps creux ou le parallélépipède creux (10) est agencé avec une forme fermée, de manière à loger un moyen, formé par au moins un corps solide et servant à favoriser la vente ou attirer l'attention.

5. Boîte à volet rabattable selon l'une des revendications 1 à 3, caractérisée en ce que le corps creux ou le parallélépipède creux (10) est agencé en étant fermé d'une manière étanche aux liquides, de manière à loger un moyen formé par au moins un corps liquide et servant à favoriser la vente ou à attirer l'attention.

6. Boîte à volet rabattable selon la revendication 5, caractérisée en ce que le corps creux ou le parallélépipède creux est rempli d'un liquide.

7. Boîte à volet rabattable selon la revendication 4 ou 5, caractérisée en ce que le corps creux ou le parallélépipède creux (10) est agencé sous la forme de deux coques, les deux coques pouvant être réunies selon une liaison par formes complémentaires et/ou selon une liaison de force.

8. Boîte à volet rabattable selon la revendication 4 ou 5, caractérisée en ce que le corps creux ou le parallélépipède creux (10) est agencé d'un seul tenant et que son extrémité ouverte est équipée d'un moyen de fermeture, des ouvertures d'aération, de préférence présentes, étant fermées.

9. Boîte à volet rabattable selon la revendication 4 ou 5, caractérisée en ce que le corps creux ou le parallélépipède creux (10) est agencé sous la forme d'un profilé creux allongé, dont les deux extrémités ouvertes sont équipées respectivement d'un moyen de fermeture.

10. Boîte à volet rabattable selon la revendication 6 ou 7, caractérisée en ce qu'il est prévu comme moyen de fermeture un bouchon (11.1) ou un capuchon (11.2).
